Europäisches Patentamt

European Patent Office

Office européen des brevets

(19)

(11) Publication number: **0 289 293 B1**

(12) EUROPEAN PATENT SPECIFICATION

(45) Date of publication of patent specification: **08.07.92**   (51) Int. Cl.⁵: **B60S  1/38**

(21) Application number: **88303819.2**

(22) Date of filing: **27.04.88**

(54) Pivot joint.

(30) Priority: **30.04.87 GB 8710341**

(43) Date of publication of application:
**02.11.88 Bulletin  88/44**

(45) Publication of the grant of the patent:
**08.07.92 Bulletin  92/28**

(84) Designated Contracting States:
**BE DE ES FR IT**

(56) References cited:
EP-A- 0 236 061        DE-A- 2 948 931
FR-A- 2 543 757        GB-A- 2 041 730
GB-A- 2 048 658        GB-A- 2 055 561
GB-A- 2 189 687

(73) Proprietor: **TRICO FOLBERTH LIMITED**
**Great West Road**
**Brentford, Middlesex TW8 9HP(GB)**

(72) Inventor: **Durtnal, Graham**
**106 Cowper Road**
**Hanwell London, W7 1EJ(GB)**

(74) Representative: **Pedder, James Cuthbert**
**J.C. Pedder & Co. 38 Norbury Cross**
**Norbury London SW16 4JO(GB)**

## Description

This invention relates to a pivot joint for use, in particular, in providing joints for the harness of a windscreen wiper blade but is not limited to this application.

In the manufacture of windscreen wipers, a number of pivot joints are used particularly between the various yokes and/or levers of the harness of the windscreen wiper blade.

Problems exist in the manufacture of windscreen wipers, due to the necessity, very often, of pivoting metal parts together. These tend to be noisy and have a tendency to suffer from wear and corrosion. Various proposals have been made for overcoming these problems, for example, by the provision of plastics members between the metal of the joints, but these have not proven entirely satisfactory from the manufacturing standpoint although they have worked satisfactorily in practice.

Particular problems exist in the connection of secondary yokes to tertiary yokes because of the relatively small dimensions of the yokes or levers involved and thus the difficulty in providing pivot joints of a plastics material which can stand up to the wear and tear necessary for adequate functioning of the windscreen wiper blade.

In one prior proposal (GB-A-2041730), a plastics joint body was provided of a relatively complicated construction in which the joint body had two pairs of legs extending from a base part of the joint body, one pair of legs extending in a clearance between the two yokes and serving to attach the joint body to the outer yoke while the second pair of legs extends through the aperture of the inner yoke and serves to provide a pivotal connection with the inner yoke.

In another prior proposal (FR-A-2453757) a plastics joint body is provided with a pair of legs moulded with ball ends which lie between the two yokes and cooperates with oppositely directed recesses in the yokes. The joint body is held in place by means of a central depending portion which passes through an aperture in the base of the inner yoke and engages the interior of the inner yoke at the recesses therein. This construction, however, necessitates post-forming of the outer yoke in order to engage the the ball ends of the joint body securely. This is also a relatively complicated construction.

The present invention seeks to provide a pivot joint which is particularly useful in connecting together the smaller yokes or levers of a windscreen wiper blade harness and which is of relatively simple construction while enabling the above mentioned problems to be obviated or substantially reduced.

According to the invention, there is provided a pivot joint comprising a first member and a second member to be pivotally connected together, the first member is of channel section at least in the region of the joint and the second member being of dimensions adapted to sit within the first member with clearance, the first member having a pair of aligned indentations on the joint axis which form opposed projections in the channel of the first member and the second member having a pair of aligned recesses or apertures for alignment with the projections of the first member and a joint body which is of plastics material is adapted to sit within the first member within the clearance between the first and second members and has a pair of oppositely extending trunnions for engagement in the recesses or apertures in the second member and a pair of recesses situated externally of the joint body and aligned with the trunnions for engagement with the projections on the first member (Pivot joint of the type disclosed on the right side of Figure 3 of GB-A-2 041 730), characterised in that, the joint body is of generally channel section with a U-shaped cross section and is adapted to lie substantially entirely in the clearance between the first and second members and the trunnions are internally oppositely extending for engagement in the recesses or apertures in the second member.

The recessed guide paths may be tapered and widen out towards the recesses. The guide paths may be in the form of a single recess which extends from the recess on one side of the joint body right around the base of the channel of the joint body to the recess on the other side of the joint body.

The projections on the first member and the recesses in the joint body may be of substantially conical complimentary shape. The trunnions on the joint body and the recesses or apertures in the second member may be of larger diameter than the recesses of the joint body and the projections of the first member.

The invention will now be described in greater detail, by way of example, with reference to the drawings, in which:-

Figure 1 is a perspective view of one form of pivot joint in accordance with the invention;

Figure 2 is a perspective view of the joint body used in the joint of figure 1 from above and to one side;

Figure 3 is a perspective view of the joint body of figure 2 but taken from the other side and underneath the joint body;

Figure 4 is an exploded view showing the parts of the pivot joint prior to assembly;

Figure 5 is a sectional view taken on the line V-V of figure 1, and

Figure 6 is a view similar to figure 2 but showing a second form of joint body.

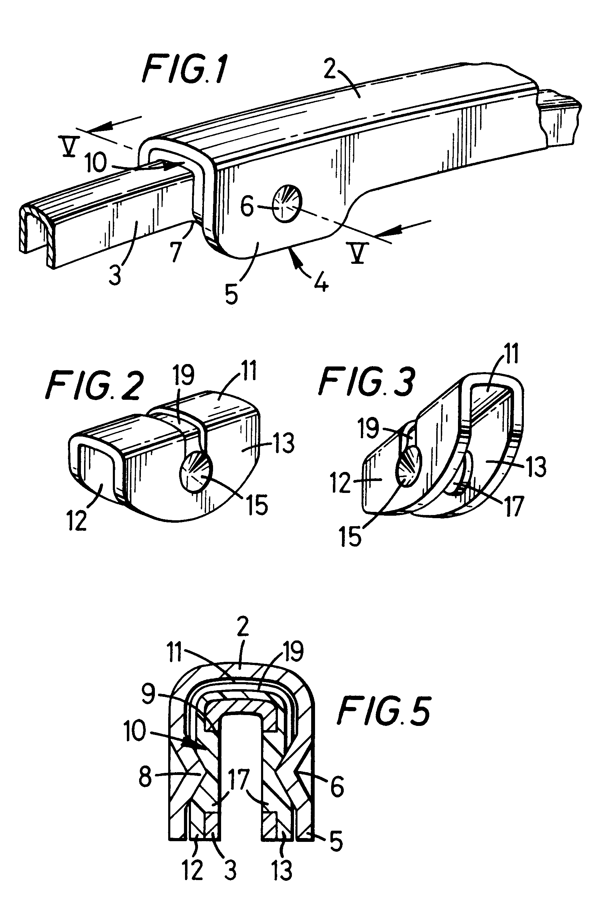

Referring firstly to figure 1, there is shown a pivot joint in accordance with the invention which comprises a first member 2 which, in this case, is a secondary yoke or lever of the harness of a windscreen wiper blade and a second member 3 which is a tertiary yoke or lever of a windscreen wiper blade harness and will usually have at its outer ends a claw construction for retaining the blade rubber and/or vertebra of the windscreen wiper blade. These two yokes or levers 2 and 3 are connected together by means of a pivot joint indicated at 4. As far as figure 1 is concerned, it will be seen that the end of the yoke 2 is provided with depending ear portions 5 which are provided with indents 6 of generally conical shape, the apex of the cone lying on the pivot axis of the joint.

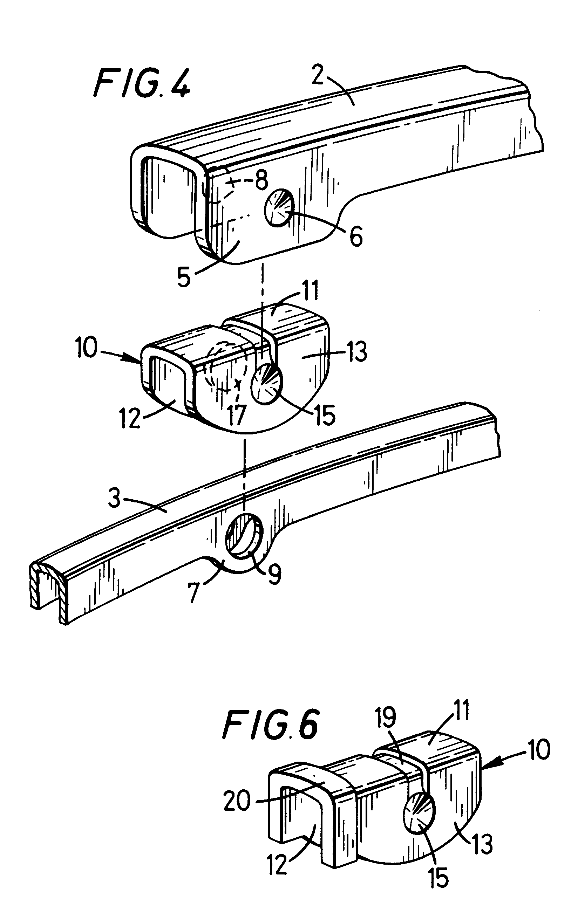

The tertiary yoke or lever 3 is also provided with depending ear portions 7 which are briefly visible in figure 1 but can be best seen in figure 4. These depending portions 7 are provided with apertures 9 which cooperate with a joint body 10 of the pivot as will be described hereafter. The pivot joint, as can be seen, is arranged such that the secondary yoke has, at least at its end, a channel shaped section in which the tertiary yoke or lever 3 can sit with a clearance (not shown) for a purpose to be described.

The joint body 10 which can best be seen from figures 2 and 3 is moulded from a suitably resilient plastics material. This joint body 10 is of generally U shaped cross-section having a base portion 11 and two side walls 12 and 13 respectively. On its exterior, the joint body 10 is formed with two conical recesses 15 in the side walls 12 and 13 and these recesses 15 are intended to be associated with the secondary lever or yoke 2 when assembled. On the interior of the side walls 12 and 13 of the joint body 10, two inwardly oppositely directed trunnion elements 17 are provided which are intended to cooperate with the apertures 9 in the tertiary yoke 3.

Two conical recesses 15 are connected together by means of a recessed guide path 19 which extends from one conical recess 15, all around the base 11 of the joint body to the second conical recess 15.

The assembly of the joint will now be described:-
The two yokes or levers 2 and 3 having been formed with the appropriate indentations 6 or apertures 9 and the joint body 10 having been moulded, the joint body 10 is first pushed over the tertiary yoke 3 so that its trunnions 17 are in line with the apertures 9. Due to the plastics material of which the joint body is made, the sides 12 and 13 of the channel are movable away from each other so as to permit the trunnions 17 to pass around the sides of the tertiary yoke or lever 3 and when the trunnions 17 come into alignment with the apertures 9, they will snap into the apertures 9. the side walls 12 and 13 of the joint body returning to their original parallel state. In this situation, the lever 3 and the joint body 10 are relatively pivotable.

The tertiary yoke or lever 3 together with the joint body 10 attached thereto are then offered up to the secondary yoke or lever 2, the internal projections of the secondary yoke or lever 2 being initially engaged in the recessed guide path 19 and the two yokes or levers 2 and 3 are forced together so that the projections 8 are forced down the recessed guide path 19, and into the recesses 15 in the joint body 10. As before, the plastics material of the joint body 10 is such as to allow sufficient resilience for the projections 8 to pass along the recessed guide path 19 and enter the recesses 15 so as to be secured thereby. The base portion 11 of the joint body 10 is a close fit inside the lever 2 and pivoting 2 will not normally take place between the lever 2 and joint body 10.

It is to be noted that the direction of the recessed guide path 19 is such that there is a minimum application of force in operation of the windscreen wiper blade in this direction so as to avoid any possibility of accidental detachment.

While, with a windscreen wiper blade, the type of joint above described will not require to be disassembled, nevertheless for other possible types of pivot joint, this disassembly may be required and this can be achieved by reversing the assembly procedures.

Figure 6 shows a variation of the joint body shown in figures 2 and 3 in which one end of the joint body is provided with an enlarged end 20 against which the end of the secondary yoke or lever 2 lies and which provides a cover for the open end of the joint. Additionally it provides for protection of the joint in the longitudinal sense since if, for example, the windscreen wiper blade is dropped on its end, the longitudinal stresses will be taken up to a large extent by the shoulder of the enlarged part 20, thus leaving the somewhat more delicate trunnion arrangement 17 with minimal stress under those circumstances.

It will be appreciated that various modifications may be made to the above described embodiments without departing from the scope of the invention. For example, with a sufficiently resilient plastics material, the recessed guide path 19 may be omitted and this is particularly the case with the embodiment of figure 6. The enlarged end 20 will act as appropriate locating device when assembling the tertiary yoke or lever together with the joint body 10 to the secondary yoke or lever 2.

While in the arrangements shown in figures 1 to 5, the pivotting takes place between the lever 3 and the joint body 10, it will be understood that by suitable dimensioning of the parts, the joint body 10 could be stationary relative to the lever 3 and pivotable relative to the lever 2.

## Claims

1. A pivot joint comprising a first member (2) and a second member (3) to be pivotally connected together, the first member (2) is of channel section at least in the region of the joint and the second member being of dimensions adapted to sit within the first member with clearance, the first member (2) having a pair of aligned indentations (6) on the joint axis which form opposed projections (8) in the channel of the first member (2) and the second member (3) having a pair of aligned recesses or apertures (9) for alignment with the projections (8) of the first member (2) and a joint body (10) which is of plastics material is adapted to sit within the first member (2) within the clearance between the first and second members (2,3) and has a pair of oppositely extending trunnions (17) for engagement in the recesses or apertures (9) in the second member (3) and a pair of recesses (15) situated externally of the joint body (10) and aligned with the trunnions (17) for engagement with the projections (8) on the first member (2) characterised in that the joint body (10) is of generally channel section with a U-shaped cross section and is adapted to lie substantially entirely in the clearance between the first and second members (2, 3) and the trunnions (17) are internally oppositely extending for engagement in the recesses or apertures (19) in the second member (3).

2. A pivot joint as claimed in claim 1, characterised in that the joint body (10) has a recessed guide path or paths (19) which extend from the exterior of the base of the channel of the joint body (10) to the recesses (15) in the joint body (10) for guiding the projections (8) of the first member (2) into the recesses (15) of the joint body (10) during assembly.

3. A pivot joint as claimed in claim 2, characterised in that the recessed guide paths (19) are tapered and widen out towards the recesses (15) in the joint body (10)

4. A pivot joint as claimed in claim 2 or 3, characterised in that the guide paths (19) are in the form of a single recess which extends from the recess (15) on one side of the joint body (10) right around the base of the channel of the joint body (10) to the recess (15) on the other side of the joint body (10).

5. A pivot joint as claimed in any one of claims 1 to 4, characterised in that the projections (8) on the first member (2) and the recesses (15) in the joint body (10) are of substantially conical complimentary shape.

6. A pivot joint as claimed in any one of claims 1 to 5, characterised in that the trunnions (17) on the joint body (10) and the recesses or apertures (9) in the second member (3) are of larger diameter than the recesses (15) of the joint body (10) and the projections (8) of the first member (2).

## Revendications

1. Articulation à pivot comprenant un premier élément (2) et un second élément (3) destinés à être reliés de façon pivotante, le premier élément (2) est un profilé en U au moins dans la zone de l'articulation et le second élément est de dimensions aptes à lui permettre de se loger à l'intérieur du premier élément avec un débattement, le premier élément (2) ayant une paire de dentelures alignées (6) sur l'axe du joint qui forment des saillies en regard (8) dans le profilé en U du premier élément (2) et le second élément (3) comportant une paire d'évidements ou d'ouvertures (9) alignés destinés à l'alignement sur les saillies (8) du premier élément (2) et un corps d'articulation (10) en matière plastique qui est apte à se loger à l'intérieur du premier élément (2) à l'intérieur du débattement entre les premier et second éléments (2, 3) et il comporte une paire de tourillons (17) s'étendant de façon opposée et destinés à coopérer avec les évidements ou ouvertures (9) dans le second élément (3) et une paire d'évidements (15) situés de façon extérieure au corps d'articulation (10) et alignés sur les tourillons (17) et destinés à coopérer avec les saillies (8) sur le premier élément (2), caractérisée en ce que le corps d'articulation (10) présente de façon générale une section transversale profilée en U et en ce qu'il est apte à reposer sensiblement dans sa totalité à l'intérieur du débattement entre les premier et second éléments (2, 3) et en ce que les tourillong (17) s'étendent intérieurement de façon opposée pour la coopération avec les évidements ou ouvertures (19) dans le second élément (3).

2. Articulation à pivot selon la revendication 1, caractérisée en ce que le corps d'articulation (10) comporte une voie ou des voies (19) de guidage évidée(s) qui s'étende(nt) à partir de l'extérieur de l'embase du profilé en U du corps d'articulation (10) vers les évidements (15) dans le corps d'articulation (10) pour le guidage des saillies (8) du premier élément (2) dans les évidements (15) du corps d'articulation (10) pendant l'assemblage.

3. Articulation de pivot selon la revendication 2, caractérisée en ce que les voies de guidage évidées (19) sont coniques et s'élargissent vers les évidements (15) dans le corps d'articulation (10).

4. Articulation à pivot selon la revendication 2 ou 3, caractérisée en ce que les voies de guidage (19) présentent la forme d'un évidement unique qui s'étend à partir de l'évidement (15) sur un côté du corps d'articulation (10) tout autour de l'embase du proilé an U du corps d'articulation (10) vers l'évidement (15) de l'autre côté du corps d'articulation (10).

5. Articulation à pivot selon l'une quelconque des revendications 1 à 4, caractérisée en ce que les saillies (8) sur le premier élément (2) et les articulations (15) dans le corps d'articulation (10) sont de forme complémentaire sensiblement conique.

6. Articulation à pivot selon l'une quelconque des revendications 1 à 5, caractérisée en ce que les tourillons (17) sur le corps d'articulation (10) et les évidements ou ouvertures (9) dans le second élément (3) ont un plus grand diamètre que les évidements (15) du corps d'articulation (10) et que les saillies (8) du premier élément (2).

**Patentansprüche**

1. Schwenkverbindung, die ein erstes Teil (2) und ein zweites Teil (3) umfaßt, die schwenkbar miteinander verbunden werden sollen, wobei das erste Teil (2) zumindest im Verbindungsbereich einen kanalförmigen Abschnitt aufweist und das zweite Teil eine solche Abmessung hat, daß es mit einem Spielraum innerhalb des ersten Teils sitzt, Wobei das erste Teil (2) auf der Verbindungsachse ein Paar axial ausgerichteter Vertiefungen (6) aufweist, die im Kanal des ersten Teils (2) entgegengesetzte Vorsprünge (8) bilden, und das zweite Teil (3) ein Paar axial ausgerichteter Vertiefungen oder Öffnungen (9) zum axialen Ausrichten mit den Vorsprüngen (8) des ersten Teils (2) aufweist, und ein Verbindungskörper (10), der aus Kunststoffmaterial besteht, so angepaßt ist, daß er innerhalb des Spielraums zwischen dem ersten und zweiten Teil (2, 3) innerhalb des ersten Teils (2) sitzt, und ein Paar sich entgegengesetzt erstreckender Drehzapfen (17) zum Eingriff in die Vertiefungen oder Öffnungen (9) im zweiten Teil (3) und ein Paar Vertiefungen (15) aufweist, die außerhalb des Verbindungskörpers (10) angeordnet und mit den Drehzapfen (17) zum Eingriff in die Vorsprünge (8) auf dem ersten Teil (2) ausgerichtet sind, dadurch gekennzeichent, daß der Verbindungskörper (10) einen im allgemeinen kanalförmigen Abschnitt mit einem U-förmigen Querschnitt aufweist und so angepaßt ist, daß er im wesentlichen vollständig im Spielraum zwischen dem ersten und zweiten Teil (2, 3) liegt, und die Drehzapfen (17) sich innenliegend entgegengesetzt erstrecken, damit ein Eingriff in die Vertiefungen oder Öffnungen (19) im zweiten Teil (3) erfolgt.

2. Schwenkverbindung nach Anspruch 1, dadurch gekennzeichnet, daß der Verbindungskörper (10) eine oder mehrere ausgesparte Führungsbahnen (19) aufweist, die sich von der Außenseite des Grundteils des Kanals des Verbindungskörpers (10) zu den Vertiefungen (15) des Verbindungskörpers (10) erstrecken, um die Vorsprünge (8) des ersten Teils (2) beim Zusammenbau in die Vertiefungen (15) des Verbindungskörpers (10) zu leiten.

3. Schwenkverbindung nach Anspruch 2, dadurch gekennzeichnet, daß die ausgesparten Führungsbahnen (19) konisch sind und sich in Richtung der Vertiefungen (15) des Verbindungskörpers (10) ausweiten.

4. Schwenkverbindung nach Anspruch 2 oder 3, dadurch gekennzeichnet, daß die Führungsbahnen (19) in Form einer einzelnen Vertiefung vorliegen, die sich von der Vertiefung (15) auf einer Seite des Verbindungskörpers (10) genau entlang der Grundfläche des Kanals des Verbindungskörpers (10) zur Vertiefung (15) auf der anderen Seite des Verbindungskörpers (10) erstreckt.

5. Schwenkverbindung nach einem der Ansprüche 1 bis 4, dadurch gekennzeichnet, daß die Vorsprünge (8) auf dem ersten Teil (2) und die Vertiefungen (15) im Verbindungskörper (10) eine im Wesentlichen konische sich ergänzende Form aufweisen.

6. Schwenkverbindung nach einem der Ansprüche 1 bis 5, dadurch gekennnzeichnet, daß die Drehzapfen (17) auf dem Verbindungskörper (10) und die Vertiefungen oder Öffnungen (9) im zweiten Teil (3) einen größeren Durchmesser als die Vertiefungen (15) des Verbindungskörpers (10) und die Vorsprünge (8) des ersten Teils (2) aufweisen.

FIG.1

FIG.2

FIG.3

FIG.5

FIG.4

2

8

6

5

11

10

13

12

17

15

3

7

9

FIG.6

19

11

10

20

12

13

15